# EUROPEAN PATENT SPECIFICATION

(11) **EP 0 771 498 B1**
(45) Date of publication and mention of the grant of the patent: **09.05.2007**
(21) Application number: 96916478.9
(22) Date of filing: 16.05.1996
(51) Int. Cl.: H04L 9/00, H04B 7/00, H04B 10/00, G07C 9/00

(54) **ROLLING CODE SECURITY SYSTEM**
ROLLIERENDES CODE-SICHERHEITSSYSTEM
SYSTEME DE SECURITE A CODE DE BRASSAGE

(30) Priority: 17.05.1995 US 446886
(43) Date of publication of application: 07.05.1997
(73) Proprietor: The Chamberlain Group, Inc., Elmhurst, Illinois 60126 (US)
(72) Inventor: FARRIS, Bradford, L., Chicago, IL 60630 (US); FITZGIBBON, James, J., Chicago, IL 60630 (US)
(74) Representative: Avery, Stephen John
(86) International application number: PCT/US1996/007048
(87) International publication number: WO 1996/037063

(56) References cited:
- EP-A- 0 372 285
- WO-A-94/18036
- DE-A- 4 204 463
- GB-A- 2 265 482
- US-A- 3 906 348
- US-A- 4 037 201
- US-A- 4 529 980
- US-A- 4 535 333
- US-A- 4 638 433
- US-A- 4 750 118
- US-A- 4 847 614
- US-A- 4 988 992
- US-A- 5 412 379
- US-A- 5 471 668

## Description

### BACKGROUND OF THE INVENTION

The invention relates in general to security systems which allow operation upon the receipt of a properly coded signal. More particularly, the invention relates to a security system or to a barrier operator system, such as a garage door operator, employing a transmitter and a receiver which communicate via code streams having at least a portion thereof which changes with multiple operation of the device.

It is well known in the art to provide garage door operators or other barrier operators which include an electric motor connectable through a transmission to a door or other movable barrier which is to be opened and closed. Since many of these systems are associated with residences, as well as with garages, it is important that opening of the barrier be permitted only by one who is authorized to obtain entry to the area which the barrier protects. Some garage door operator systems have in the past employed mechanical lock and key arrangements associated with electrical switches mounted on the outside of the garage. While these systems enjoy a relatively high level of security, they are very inconvenient to use because they necessitate the operator exiting her vehicle in order to send the command to open the garage door. This also may present some danger to people when they leave the relative security of their vehicle if someone may be waiting to do injury to them.

It is also well known to provide radio-controlled garage door operators which include a garage door operator unit having a radio receiver and a motor connected to be driven from the radio receiver. The radio receiver is adapted to receive radio frequency signals or other electromagnetic signals having particular signal characteristics which, when received, cause the door to be opened. More recently, such transmitter and receiver systems have become relatively more sophisticated in that they use radio transmitters which employ coded transmissions of multiple or three-valued digits, also known as "trinary bits" or other serial coded transmission techniques. Among these systems are U.S. Patent No. 3,906,348 to Willmott, which employs a transmitter and receiver system wherein a plurality of mechanical switches may be used to set a stored authorization code.

U.S. Patent No. 4,529,980 to Liotine et al. discloses a transmitter and receiver combination for use in a device such as a garage door operator wherein the transmitter stores an authorization code which is to be transmitted to and received by the receiver via a radio frequency link. In order to alter or update the authorization code contained within the transmitter, the receiver is equipped with a programming signal transmitter or light emitting diode which can send a digitized optical signal back to the transmitter where it is stored. Other systems also employing encoded transmissions are shown in U.S. Patents Nos. 4,037,201, 4,535,333, 4,638,433, 4,750,118 and 4,988,992.

While each of these devices have provided good security for the user, it is apparent that persons wishing to commit property or person-related crimes have become more sophisticated as well. It is known in the security industry today that devices are being made available that can intercept or steal transmitted codes.

Transequatorial Technology, Inc. sells integrated circuit code hopping encoders identified as Keeloq models NTQ105, NTQ115, NTQ125D and NTQ129. Some of the Keeloq code hopping encoders generate serial codes having fixed portions, i.e., which do not change with repeated actuation of the encoding portion of the chip and rolling code portions which alter with each actuation of the encoding portion of the chip. In order to avoid, however, having the problem of the encoding portion of the chip having been inadvertently enabled and causing the rolling code to be altered on successive enabling attempts thereby leading to a rolling code which is transmitted and not recognized by a receiver, the Keeloq code hopping encoders provide a forward window system, that is they are operable with systems having code receivers which recognize as a valid code not a single rolling code, but a plurality of rolling codes within a certain code window or window of values which are the values which would be generated on a relatively small number of switch closures as compared to the total number of rolling codes available. The problem with such a system, however, might arise if a user was away for a period of time or had inadvertently caused codes to be transmitted beyond the number of codes normally allowed within the valid forward code window. In that case, the rolling code would not be recognized by the receiver and the user could not gain entry without taking other measures to defeat the locking system or the garage door operator system which might involve the intervention of a trained engineer or technician.

Texas Instruments also has a prior system identified as the Marcstar TRC1300 and TRC1315 remote control transmitter/receiver combination. The system involves the use of a rolling code encoder which increments or rolls potentially the entire code, that is it does not leave a fixed portion. The system also includes a forward windowing function which allows an authorized user to be able to cause the receiver to be enabled within a limited number of key pushes. Like the Keeloq system, if the forward window is exceeded, the Texas Instruments system must be placed in a learn mode to cause the system to relearn the code. In order to place the system into the learn mode, the person must obtain direct access to the receiver to cause a programming control system associated with the receiver to be hand actuated causing the receiver to enter a learn mode. Once the receiver has learned the new code, the receiver will then construct a new valid forward code window within which valid rolling codes may be received. The problem, of course, with such a system is that if, for instance in a garage door operator, the only portal of entry to the garage door is through the overhead door controlled by the garage door operator, the user will not be able to obtain entry to the garage without possibly having to do some damage to the structure. This problem is sometimes referred to in the industry as a "vaulted garage."

What is needed is an economical encoding system which provides good security by using a rolling code, but which enables a user of the system to proceed via a gradually degraded pathway in the event that the receiver detects a signal condition indicative of what might be a lack of security.

In WO 94/18036 there is disclosed a remote-controlled protection system for a motor vehicle. The system consists of a remote-control key for generating and transmitting an unlocking signal as well as a system arranged in the vehicle for receiving and processing the unlocking signal. The unlocking signal is changed each time the remote control key is actuated. In order to generate an unlocking code, a signal generating device arranged in the key comprises a device for generating a fixed code and a device for generating a rolling code, as well as a coding device. The outputs of the code generating devices are fed to the coding device, which generates a coded unlocking signal by linking the fixed code and the rolling code by ANDing or EXORing. The output signal of the coding device is fed to a transmitter that emits an output signal via an antenna. The coding unlocking signal received in a motor vehicle is fed to a decoding device which is designed for reversing the coding process in order to generate the fixed code and the rolling code from the received unlocking signal.

In US-A-5 444 737 there is disclosed a full duplex data transceiver for transmitting and receiving trinary frequency-modulated signals, representing binary data which includes at least one antenna and a single oscillator which serves as both the radio frequency signal source for the transmitter and the local oscillator signal source for the receiver.

In US A 5 331 325 there is disclosed a remote control transmitter including an encoder which transmits a fixed trinary code.

### SUMMARY OF THE INVENTION

The invention relates in general to an electronic system for providing remote security for entry of actuation of a particular device. Such a system may include a transmitter and receiver set, for instance with a hand-held transmitter and a receiver associated with a vehicle such as an automobile or the like. The transmitter, upon signaling the receiver, causing the vehicle to start up or to perform other functions. The system may also be useful in a barrier operator system such as a garage door operator by allowing the garage door to be opened and closed in a relatively secure fashion while preventing persons who may be intercepting the radio frequency signals from being able to, although unauthorized, cause the vehicle to begin running or to allow access to the garage.

According to the present invention there is provided a transmitter for sending an encrypted signal to control an actuator, comprising: means for generating a radio frequency oscillatory signal; means for generating a sequence of variable binary codes each representing a rolling code; means for generating three-valued or trinary codes responsive to the binary variable codes, the trinary code representing trinary values of the binary codes; and means for pulse width modulating the radio frequency oscillatory signal with the trinary code to produce a pulse width modulated trinary coded variable radio frequency signal to transmit trinary values of the rolling code for operation or control of a secure actuator.

The system includes a transmitter generally having means for developing a fixed code and a rolling or variable code. The rolling or variable code is changed with each actuation of the transmitter. The fixed code remains the same for each actuation of the transmitter. In the present system, the transmitter includes means for producing a 32-bit frame comprising the fixed portion of the code and a second 32-bit frame comprising the variable portion of the code. The 32-bit rolling code is then mirrored to provide a 32-bit mirrored rolling code. The 32-bit mirrored rolling code then has its most significant bit "deleted" by setting it to zero. The transmitter then converts the 32-bit fixed code and the mirrored variable code to a three-valued or trinary bit fixed code and a three-valued or trinary bit variable code or rolling code.

To provide further security, each of the fixed code trinary bits or digits is encrypted by adding the corresponding rolling code trinary digit to each fixed code trinary digit to produce an encrypted fixed code trinary digit. The trinary bits are further encrypted by shuffling the encrypted fixed code trinary digits and the rolling code trinary digits so that instead of a frame of encrypted fixed code digits and a second frame of rolling code trinary digits alternating sequential trinary bits in both frames are comprised of an encrypted fixed code trinary bit and a rolling code trinary bit to yield a total of 40 interleaved trinary bits. The 40 interleaved trinary bits are then packaged in a first 20-trinary bit frame and a second 20-trinary bit frame which have proceeding them a single synchronization and/or identification pulse indicating the start of the frame and whether it is the first frame or the second frame. Immediately following each of the frames, the transmitter is placed into a quieting condition to maintain the average power of the transmitter over a typical 100 millisecond interval within legal limits promulgated by the United States Federal Communications Commission. The first trinary frame and the second trinary frame are used to modulate a radio frequency carrier, in this case via amplitude modulation to produce an amplitude modulated encrypted signal. The amplitude modulated signal is then launched and may be received by an AM receiver. In the preferred embodiment, the AM receiver receives the amplitude modulated signal, demodulates it to produce a pair of trinary bit encoded frames. The trinary bits in each of the frames are converted on the fly to 2-bit or half nibbles indicative of the values of the trinary bits which are ultimately used to form two 16-bit fixed code words and two 16-bit variable code words. The two 16-bit fixed code words are used as a pointer to identify the location of a previously stored rolling code value within the receiver. The two 16-bit rolling code words are concatenated by taking the 16-bit word having the more significant bits, multiplying it by 3¹⁰ and then adding it to the second of the words to produce a 32-bit encrypted rolling code. In order to make certain that if the transmitter was inadvertently actuated a number of times, the authorized user can still start his car or gain entry to his garage. The 32-bit encrypted code is then compared via a binary subtraction with the stored rolling code. If the 32-bit code is within a forward window or fixed count, in the present embodiment 17,000, i.e., 17 x 1,000 transmitter actuations, the microprocessor produces an authorization signal which is then responded to by other portions of the circuit to cause the garage door to open or close as commanded. In the event that the code is greater than the stored rolling code, plus 17,000, indicative of a relatively large number of incrementations, the user is not locked out of the garage, but is allowed to provide further signals or indicia to the receiver that he is an authorized user without any significant degradation of the security. This is done by the receiver entering an alternate mode requiring two or more successive valid codes to be received, rather than just one. If the two or more successive valid codes are received, the garage door will open. However, in order to prevent a person who has previously or recently recorded a recent valid code from being able to obtain access to the garage, a trailing window, in this case starting at a count of 5,100, i.e., 17 x 300 transmitter actuations, less than the present stored count and including all code values between the present stored count and 5,100 less is compared to the received code. If the received code is within this backward window, the response of the system simply is to take no further action, nor to provide authorization during that code cycle on the assumption that the code has been purloined.

Thus, the present system provides important advantages over the previous garage door operator systems and even previous rolling code systems. The system provides a multiple segmented windowed system which provides a valid code window, a second relatively insecure code window in which two successive valid codes must be received and finally a window in which no valid codes are recognized due to the likelihood of the code having been stolen.

It is a principal object of the present invention to provide a security system involving a radio frequency transmitter and receiver wherein multiple security conditions may exist requiring different levels of signal security.

It is another object of the present invention to provide a secure radio transmitter receiver system which may rapidly and easily decode a relatively large code combination.

Other advantages of the invention will become obvious to one of ordinary skill in the art upon a perusal of the following specification and claims in light of the accompanying drawings.

### BRIEF DESCRIPTION OF THE DRAWINGS

FIG. 1 is a perspective view of an apparatus for moving a barrier or garage embodying the present invention;
FIG. 2 is a block diagram of a transmitter for use with a garage door operator of FIG. 1;
FIG. 3 is a block diagram of a receiver positioned within a head unit of the garage door operator shown in FIG. 1;

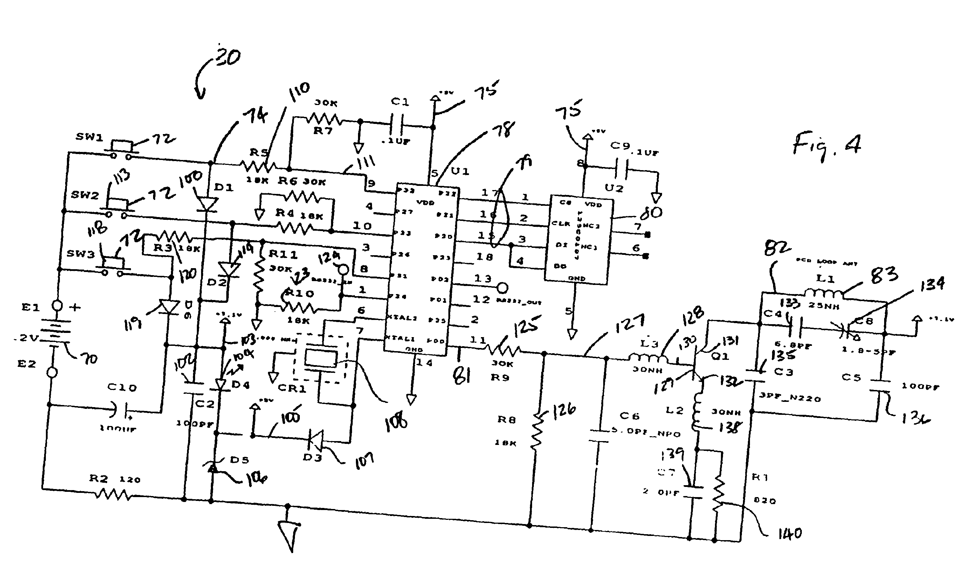

FIG. 4 is a schematic diagram of the transmitter shown in FIG. 2;
FIG. 5 is a schematic diagram of the receiver shown in FIG. 3;
FIG. 6 is a timing diagram of signals generated by a portion of the transmitter;
FIGS. 7A, B, C, and D are flow diagrams showing the operation of the transmitter; and
FIGS. 8A, B, C, D, E, F and G are flow diagrams showing the operation of the receiver.

### DETAILED DESCRIPTION OF THE PREFERRED EMBODIMENT

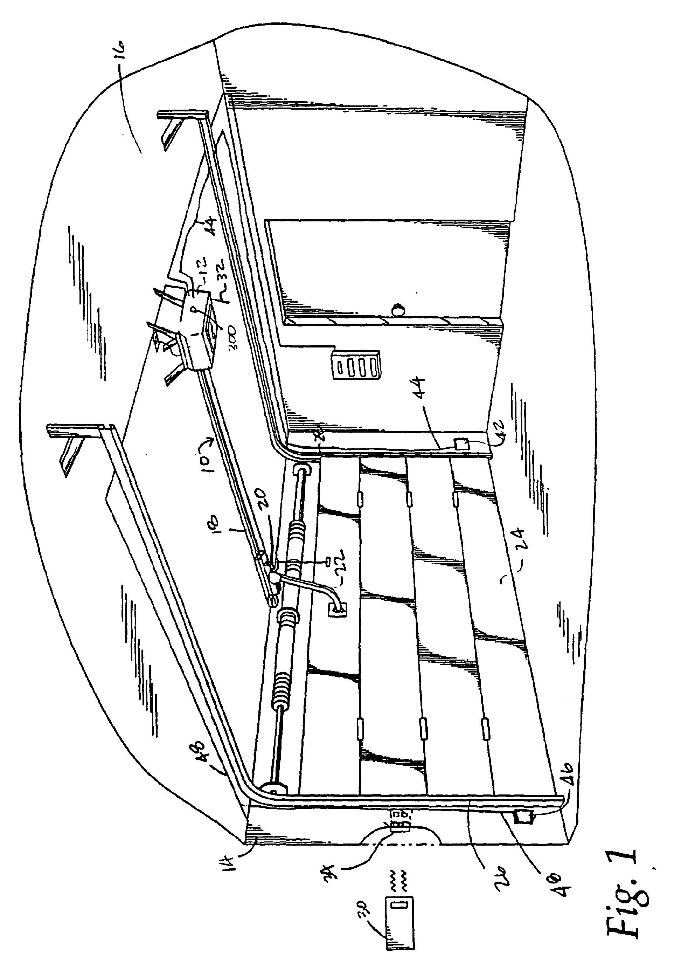

Referring now to the drawings and especially to FIG. 1, more specifically a movable barrier door operator or garage door operator is generally shown therein and includes a head unit 12 mounted within a garage 14. More specifically, the head unit 12 is mounted to the ceiling of the garage 14 and includes a rail 18 extending therefrom with a releasable trolley 20 attached having an arm 22 extending to a multiple paneled garage door 24 positioned for movement along a pair of door rails 26 and 28. The system includes a hand-held transmitter unit 30 adapted to send signals to an antenna 32 positioned on the head unit 12 and coupled to a receiver as will appear hereinafter. An external control pad 34 is positioned on the outside of the garage having a plurality of buttons thereon and communicate via radio frequency transmission with the antenna 32 of the head unit 12.

An optical emitter 42 is connected via a power and signal line 44 to the head unit. An optical detector 46 is connected via a wire 48 to the head unit 12.

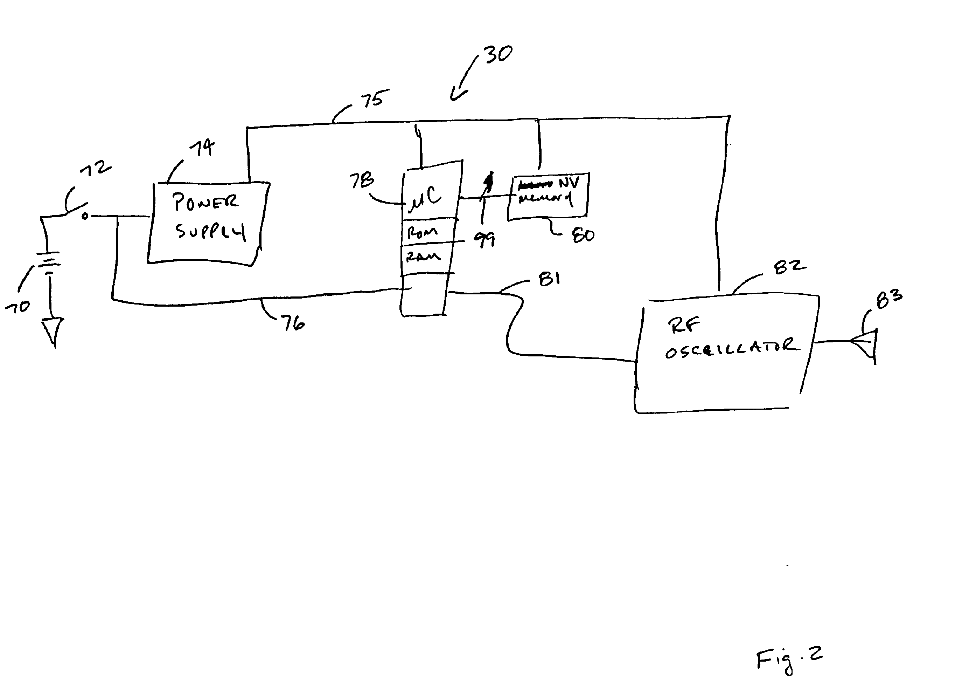

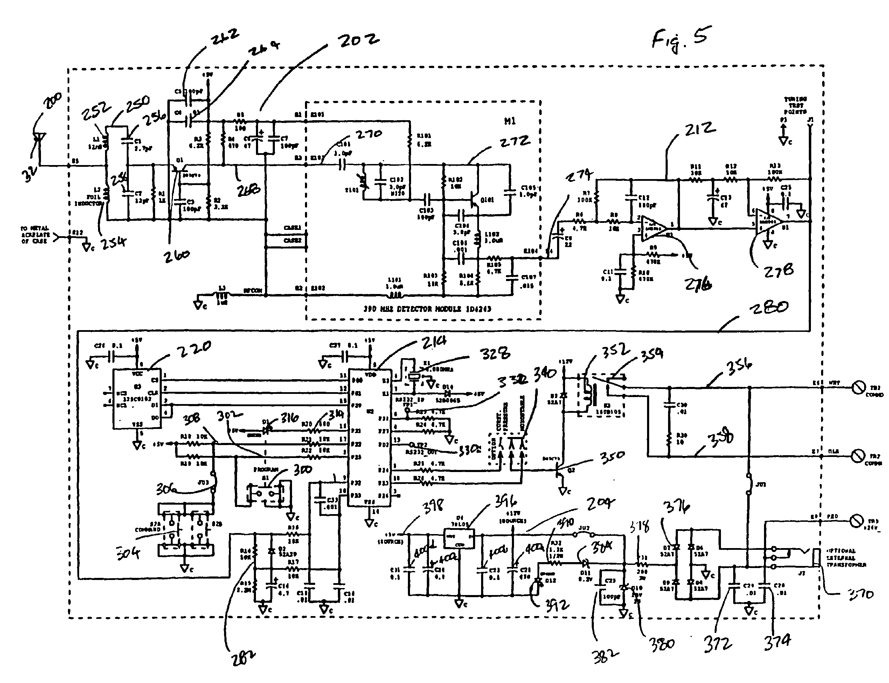

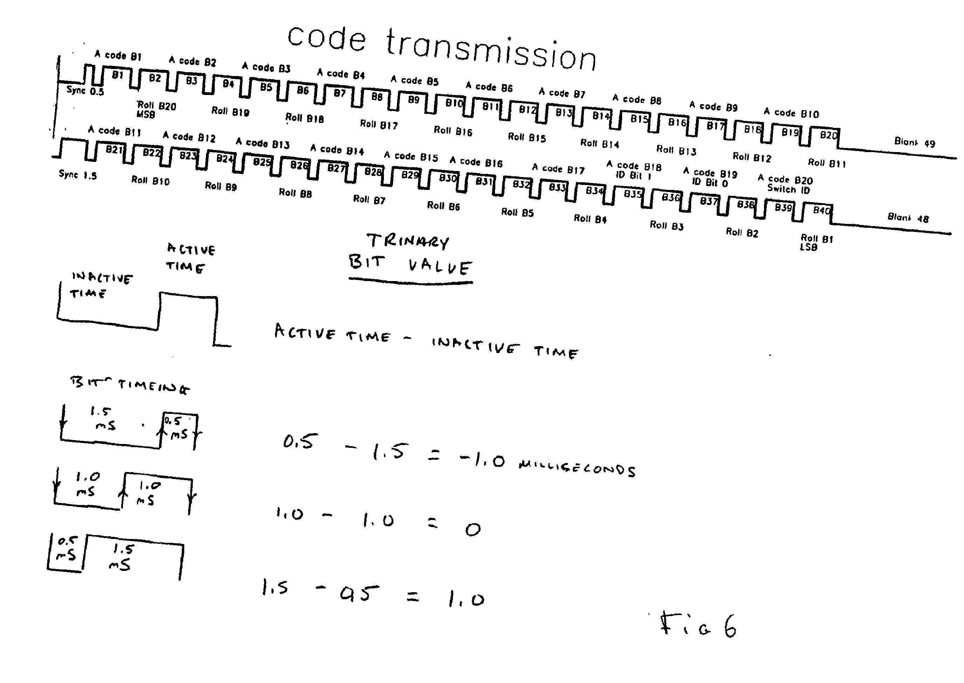

Referring now to FIG. 2, the transmitter 30 is shown therein in general and includes a battery 70 connected by a pushbutton switch 72 to a power supply 74 which is coupled via leads 75 and 76 to a microcontroller 78. The microcontroller 78 is connected by a serial bus 79 to a non-volatile memory 80. An output bus 81 connects the microcontroller to a radio frequency oscillator 82. The microcontroller 78 produces coded signals when the button 72 is pushed causing the output of the RF oscillator 82 to be amplitude modulated to supply a radio frequency signal at an antenna 83 connected thereto. More specifically, as shown in FIG. 5, details of the transmitter 30 are shown therein, including a plurality of switches 72. When switch 72 is closed, power is supplied through a diode 100 to a capacitor 102 to supply a 7.1 volt voltage at a lead 103 connected thereto. A light emitting diode 104 indicates that the transmitter button has been pushed and provides a voltage to a lead 105 connected thereto. A Zener diode 106 provides voltage regulation and the back-biased diode 107 provides over-voltage protection. The crystal 108 is energized, thereby energizing the microcontroller 78, a Zilog Z86C04 8-bit microcontroller in this embodiment. The signal is also sent via a resistor 110 through a lead 111 to a P32 pin of the microcontroller 78. Likewise, when a switch 113 is closed, current is fed through a diode 114 to the lead 103 also causing the crystal 108 to be energized, powering up the microcontroller at the same time that pin P33 of the microcontroller is pulled up. Similarly, when a switch 118 is closed, power is fed through a diode 119 to the crystal 108 as well as pull up voltage being provided through a resistor 120 to the pin P31. It should also be appreciated that pin P34 of the microcontroller is configured via a connection with the resistor 123 to be an RS232 input port 124.

The microcontroller is coupled via the serial bus 79 to a chip select port, a clock port and a DI port to which and from which serial data may be written and read and to which addresses may be applied. As will be seen hereinafter in the operation of the microcontroller, the microcontroller 78 produces output signals at the lead 81, which are supplied to a resistor 125 which is coupled to a voltage dividing resistor 126 feeding signals to the lead 127. A 30-nanohenry inductor 128 is coupled to an NPN transistor 129 at its base 130. The transistor 129 has a collector 131 and an emitter 132. The collector 131 is connected to the antenna 83 which, in this case, comprises a printed circuit board, loop antenna having an inductance of 25-nanohenries, comprising a portion of the tank circuit with a capacitor 133, a variable capacitor 134 for tuning, a capacitor 135 an a capacitor 136. An 30-nanohenry inductor 138 is coupled via a capacitor 139 to ground. The capacitor has a resistor 140 connected in parallel with it to ground. When the output from lead 81 is driven high by the microcontroller, the capacitor Q1 is switched on causing the tank circuit to output a signal on the antenna 83. When the capacitor is switched off, the output to the drive the tank circuit is extinguished causing the radio frequency signal at the antenna 83 also to be extinguished.

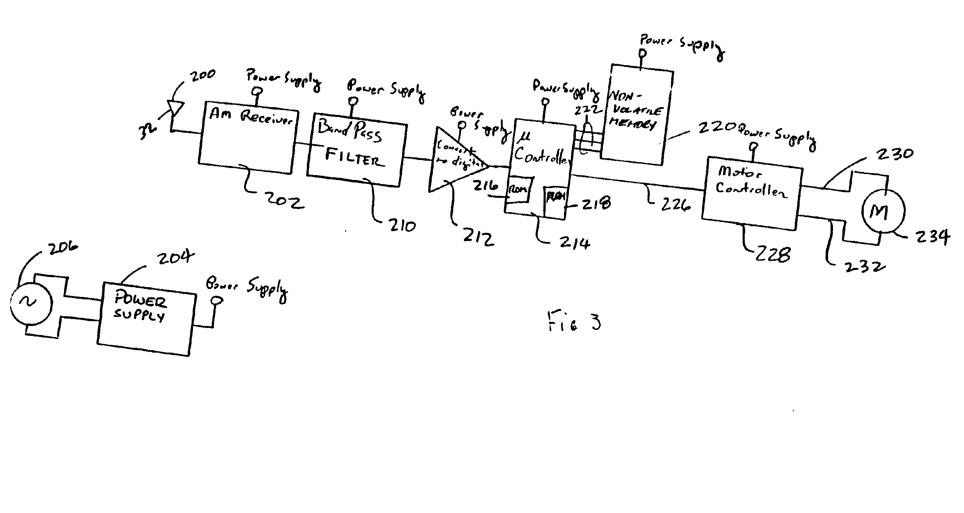

Referring now to FIG. 3, the receiver is shown therein and includes a receiver antenna 200 coupled to an amplitude modulated receiver 202 driven from a power supply 204 connectable to a source of alternating current 206. The receiver 202 provides a demodulated output via a bandpass filter 210 to an analog-to-digital converter 212 which provides input to a microcontroller 214 having an internal read-only memory 216 and an internal random-access memory 218. A serial non-volatile memory 220 is connected via a memory bus 222 to the microcontroller 214 to send and receive information thereto. The microcontroller has an output line 226 coupled to a motor controller 228 which may include a plurality of relays or other standard electromechanical features which feeds electrical current on lines 230 and 232 to an electric motor 234.

Referring now to FIG. 3 the antenna 200 coupled to a reactive divider network 250 comprised of a pair of series connected inductances 252 and 254 and capacitors 256 and 258 which supply an RF signal to a buffer amplifier having an NPN transistor 260, at its emitter 261. The NPN transistor 260 has a pair of capacitors 262 and 264 connected to it for power supply isolation. The buffer amplifier provides a buffered radio frequency output signal on a lead 268. The buffered RF signal is fed to an input 270 which forms part of a super-regenerative receiver 272 having an output at a line 274 coupled to the bandpass filter which provides digital output to the bandpass filter 212. The bandpass filter 212 includes a first stage 276 and a second stage 278 to provide a digital level output signal at a lead 280 which is supplied via an averaging circuit 282 to an input pin P32 of the microcontroller 214.

The microcontroller 214 may have its mode of operation controlled by a programming or learning switch 300 coupled via a line 302 to the P25 pin. A command switch 304 is coupled via a jumper 306 to a line 308 and ultimately through a resistor to the input pin P22. A pin P21 sinks current through a resistor 314 connected to a light emitting diode 316, causing the diode to light to indicate that the receiver is active. The microcontroller 214 has a 4 Mhz crystal 328 connected to it to provide clock signals and includes an RS232 output port 332 that is coupled to the pin P31. A switch 340 selects whether constant pressure or monostable is to be selected as the output from output terminals P24 and P23 which are coupled to a transistor 350 which, when switched on, sinks current through a coil 352 of a relay 354, causing the relay to close to provide an actuating signal on a pair of leads 356 and 358 to an electric motor.

It may be appreciated that the power supply 204 may receive power from an external transformer or other AC source through a jack 370 which is connected to a pair of RF decoupling capacitors 372 and 374. The input signal is then set to a full-wave rectifier bridge 376 which provides an output current at a resistor 378. An 18-volt Zener diode 380 is connected between ground and the resistor 378 and includes high frequency bypass capacitor 382 connected in parallel with it. An 8.2-volt Zener diode 384 is connected in back-biased configuration to the resistor 378 to receive a signal therefrom to guarantee that at least an 8.2-volt signal is fed to a resistor 390 causing an LED 392 to be illuminated and also causing power to be supplied to a 5-volt 78LO5 voltage regulator 396. The voltage regulator 396 supplies regulated voltage to an output line 398. Filtering capacitors 400a, 400b, 400c and 400d limit the fluctuations at the power supply.

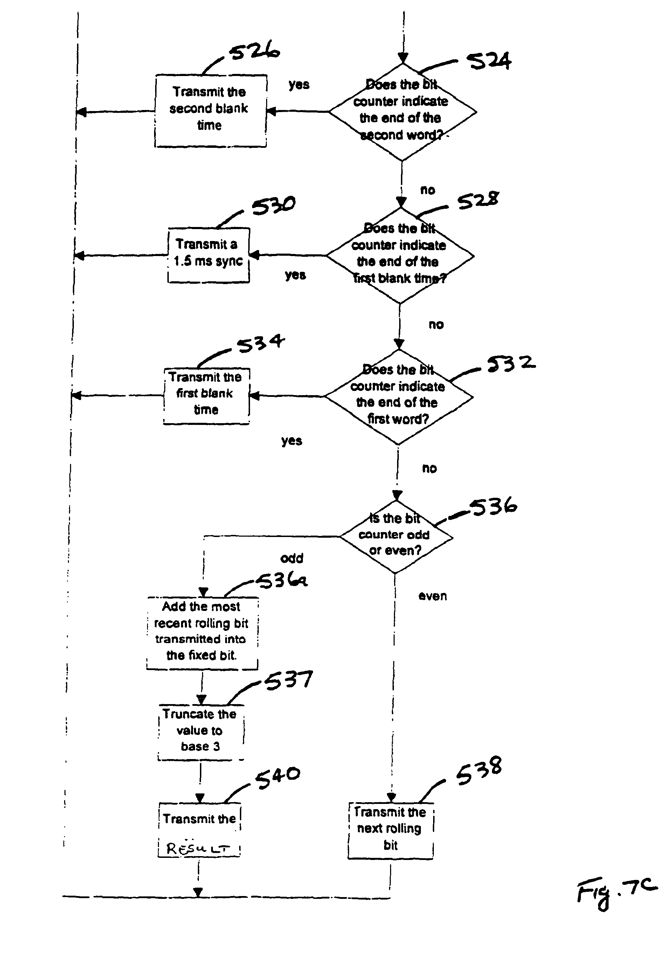

Operation of the transmitter unit begins in a step 500 as shown in Fig. 7A, wherein the user actuates a transmit button in a step 500. In a step 502 the rolling code counter value is fetched from the nonvolatile memory. In a step 504 seventeen is added to the rolling code counter value. In a step 506 the new rolling code counter value is then stored in nonvolatile memory. In a step 508 the binary representation of the rolling code counter has its bit order reversed or mirrored in order to begin encryption. In a step 510 the most significant bit of the mirrored counter value is set equal to zero.

In a step 512, as shown in Fig. 7B, the mirrored binary counter value is converted to a base 3 or trinary number as is shown in Fig. 7D and described hereafter.

Following the conversion to trinary bits or digits, in a step 514 the fixed code portion of the overall transmitted code is fetched from nonvolatile memory and in a step 516 a bit counter representative of the ordinal number of the current trinary digit is set equal to zero.

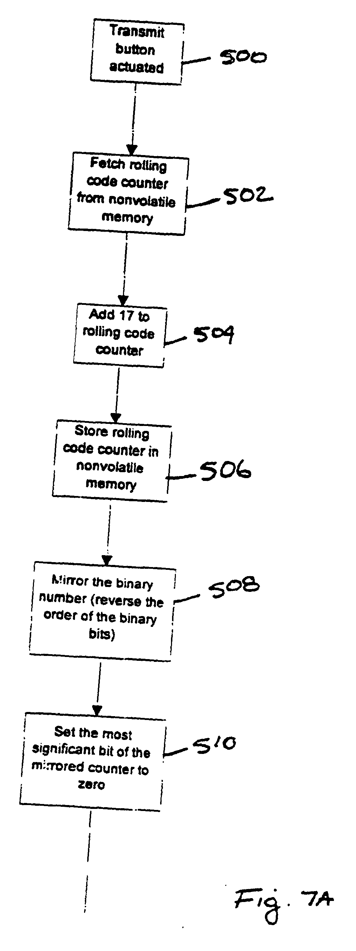

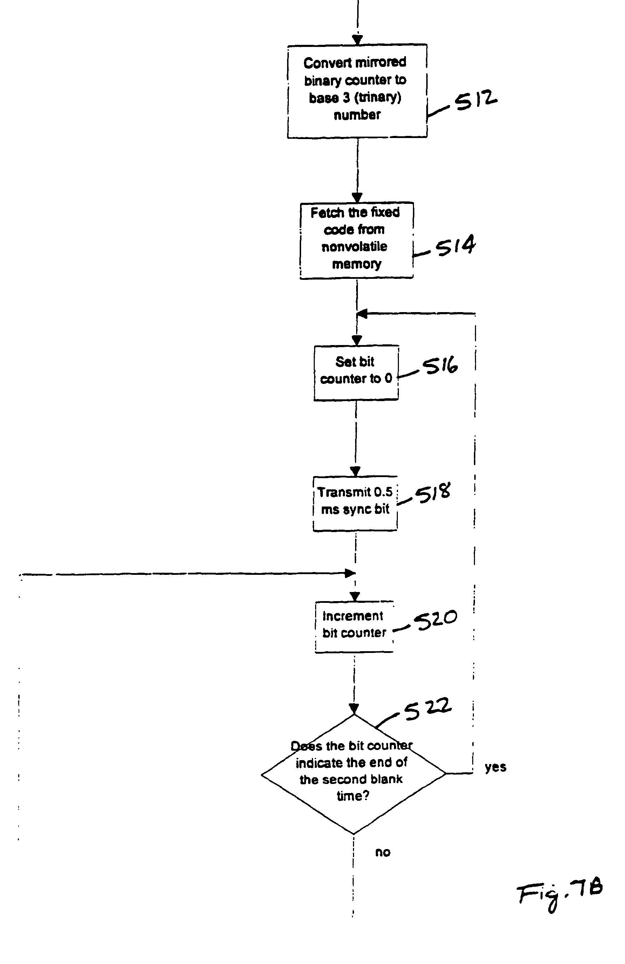

In order to perform a code framing operation to produce the code stream, as shown in Fig. 6, in a step 518 a one-half millisecond synchronization bit is transmitted by the transmitter and in a step 520 the bit counter is incremented. In a step 522 a test is made to determine whether the bit counter indicates the end of a second blanking time. If it does, control is transferred back to a step 516.

If it does not, control is then transferred to a step 524 shown in Fig. 7C wherein the bit counter is tested to determine whether it is indicative of the end of the second word. If the second word has ended, a second blank period is entered for transmission in a step 526, following which control is transferred back to step 520. If it is not a test is made in a step 528 to determine whether the bit counter indicates the end of the first blank time. If it does, a one and one-half millisecond long synchronization pulse is transmitted in a step 530 and control is then transferred back to step 520. If the bit counter does not indicate the end of the first blank time, a test is made in a step 532 to determine whether the bit counter indicates the end of the first word. If it does a first blanking period is entered into the code in a step 534, following which control is then transferred back to step 520. If it does not, a test is made in a step 536 to determine whether the current trinary bit number is odd or even, representing a fixed code trinary bit or a rolling code trinary bit respectively. If it is even the next rolling code trinary bit is transmitted in a step 538. If it is not, the most recent rolling code trinary bit that was transmitted, as shown in Fig. 6, is added to the fixed code trinary bit in a step 536a, the result is then truncated to a base 3 value in a step 537 yielding an encrypted fixed code trinary bit. The encrypted fixed code trinary bit is transmitted in a step 540 thereby causing the rolling code trinary bits and the encrypted fixed code trinary bits to be interleaved for further security. Following either step 538 or step 40 control is transferred back to the bit counter step 520.

In order to convert the encrypted or interlinked and mirrored binary rolling code to trinary a routine 550 is provided in which a value equal to 3¹⁹ is subtracted from the interlinked and mirrored code in a step 552. A test is made to determine whether the result of the subtraction is greater than zero in a step 554. If it is control is transferred to a step 556 causing the current base three digit to be incremented following which control is transferred back to step 552. If it is not the current base three digit is stored in a step 557. In a step 558 3¹⁹ is added back in order to make the binary number positive. In a step 559 the result is multiplied by 3. In a step 560 a test is made to determine whether all 20 trinary bits in the current frame have been converted to binary. If they have not control is transferred to a step 561 causing pointing to the next trinary digit to be converted in the frame. If all 20 trinary digits in the current frame have been converted, trinary number is returned in a step 564 and control is transferred back to the exit point of step 512. The base three or trinary digits are then output by the radio transmitter as a pulse width modulated trinary code in the form shown in Fig. 6.

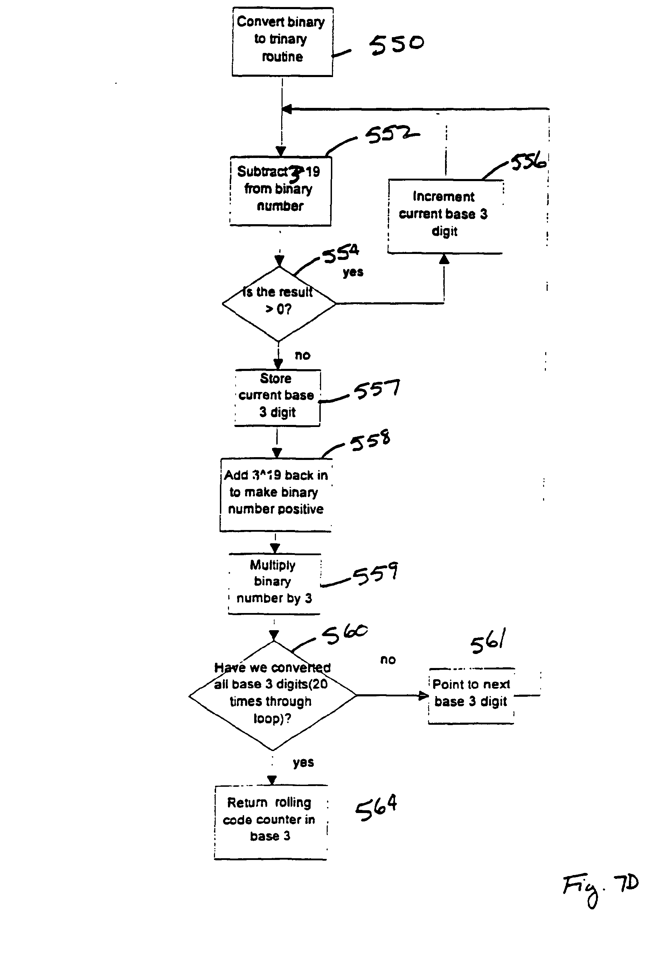

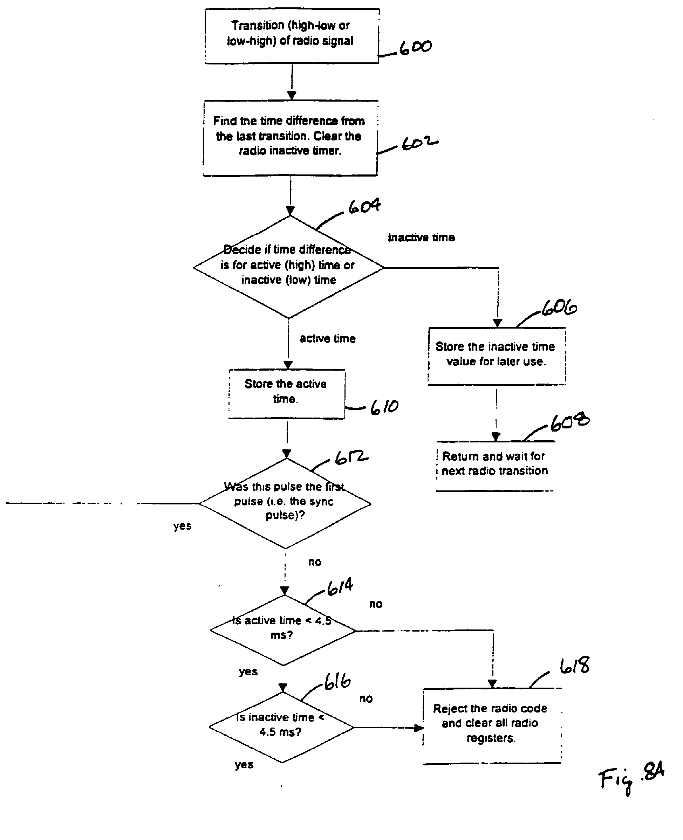

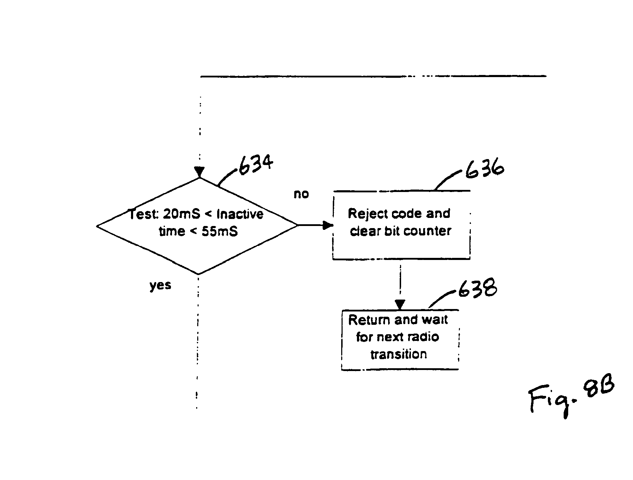

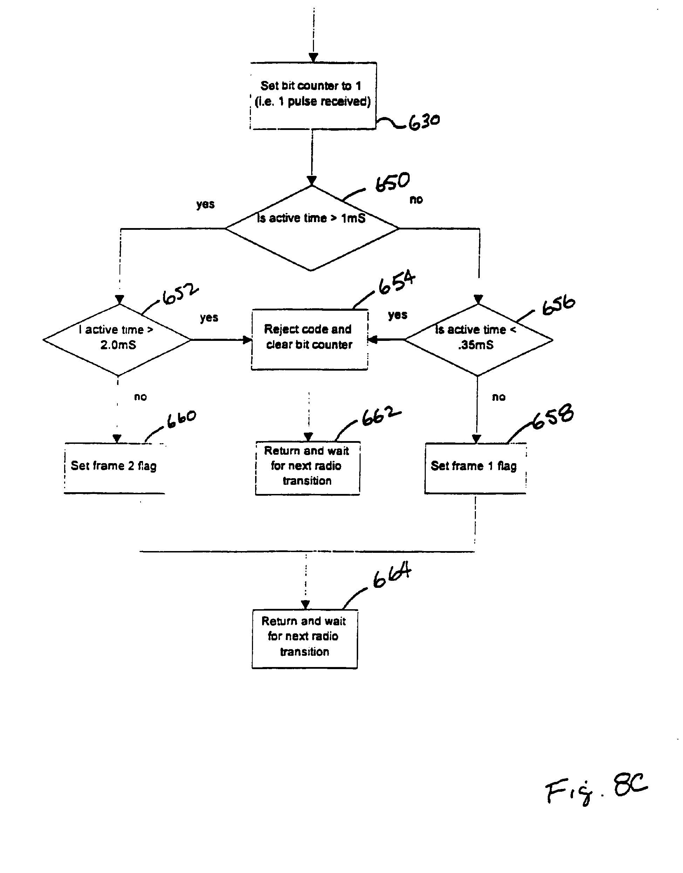

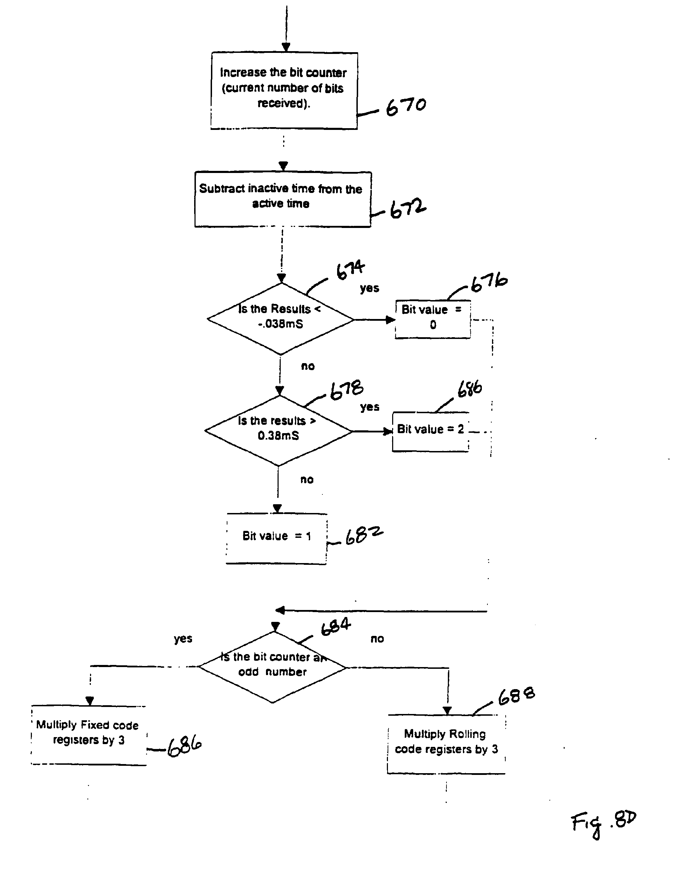

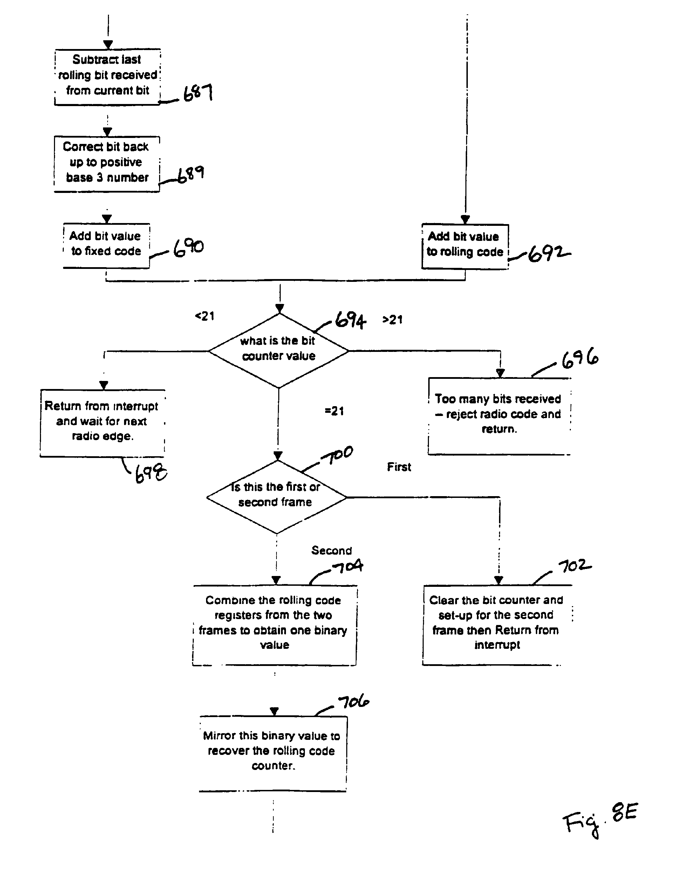

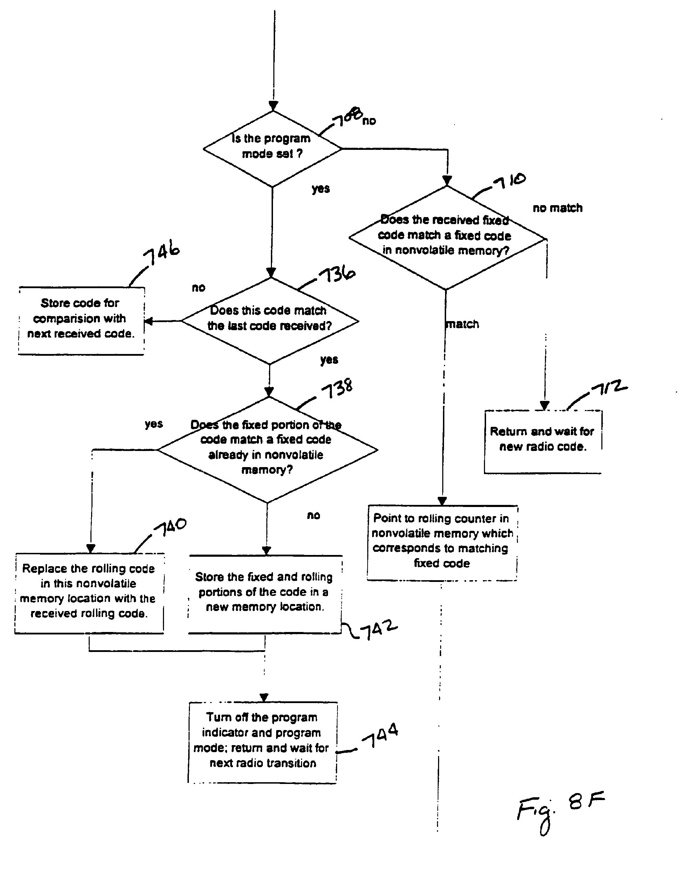

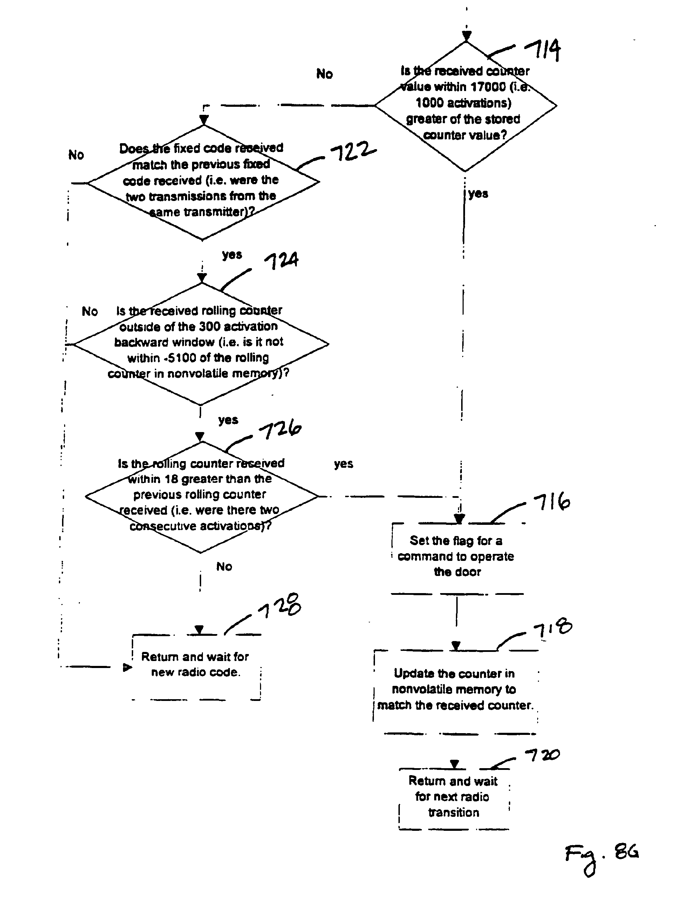

Referring now to Fig. 8A, a transition of the received radio frequency signal from low to high or from high to low is detected in a step 600. The microcontroller executes steps to identify the trinary bit stream from the transmitter. Following the transmission a time difference from the last transmission is determined in a step 602 and a radio inactive timer is cleared. In a step 604 a determination is made whether the time difference is for the active high time or inactive low time. If it is for the inactive low time the inactive time value is stored in step 606 and the routine is exited in a step 608. If the time difference is indicated to be active time, the active time is stored in a step 610 and a test is made to determine whether the pulse is the first pulse, in other words, the sync pulse in a step 612.

If the test in step 612 indicating that the pulse is the sync pulse is found to be true control is transferred to a step 634, shown in Fig. 8B which tests whether the inactive time is between 20 milliseconds and 55 milliseconds. If it is not, the trinary code is rejected in a step 636 and the bit counter is cleared. The routine is exited in step 638. If not, control is transferred to a step 650.

Following the bit counter being set to 1, control is transferred to a step 650 testing whether the active time is greater than 1.0 millisecond. This is done to determine whether the pulse is a sync pulse representative of the beginning of FRAME 1 or FRAME 2. If the active time exceeds 1.0 millisecond a test is made in a step 652 testing whether the active time is greater than 2.0 milliseconds. If the active time is greater than 2.0 milliseconds the received trinary code is rejected and the bit counter is cleared in a step 654. If in step 650 the active time is found not to be greater than 1 millisecond, control is transferred to a test 656 which tests whether the active is less than 0.35 milliseconds. If it is, the code is rejected and the bit counter is cleared in step 654. If it is not the FRAME 1 flag is set in step 658 indicating that a first frame is being received. In the event that the test from step 652 indicates that the active time is not greater than 2.0 milliseconds the FRAME 2 flag is set in a step 660. Following execution of the bit counter clearing step in step 654 the interrupt is returned from in step 662; likewise the interrupt is returned from in a step 664 following step 658 and step 660.

If it is not the received pulse tested for in step 612 is not a sync pulse a test is made in a step 614 to determine whether the active time is less than 4.5 milliseconds. In the event that the active time is found to be less than 4.5 milliseconds control is transferred to a test step 616 testing whether the inactive time is less than 4.5 milliseconds. If the active time is 4.5 milliseconds or greater control is transferred from step 614 to a step 618 causing the radio code to be rejected and all code registers related to the radio code to be cleared. In the event that the inactive time is found to be greater than 4.5 milliseconds, control is also transferred to the step 618 causing the radio to be rejected and the radio related registers to be cleared. If the inactive time is 4.5 milliseconds or less, the bit counter is set to 1 indicating that a pulse has been received in a step 630 shown in Fig. 8C.

Referring now to Fig. 8D, the microcontroller begins to separate the interleaved trinary fixed code bits from the trinary rolling code bits. In a step 670 the bit counter or current number of bits received is increased following which the inactive time is subtracted from the active time in a step 672. A test is made in a step 674 to determine whether the result of the subtraction is less than minus 0.38 milliseconds; if it is the bit value is set equal to zero in a step 676; if it is not a test is made in a step 678 to determine whether the results are greater than 0.38 milliseconds. If they are the bit value is set equal to 2. If the test of step 678 indicates the results are not greater than 0.38 milliseconds the bit value is set equal to 1 in a step 682. Steps 676, 680 and 682 all transfer control to a step 684 which tests whether the bit counter holds an odd number. If it does the fixed code registers are multiplied by three in a step 686; if it does not, the rolling code registers are multiplied by three in a step 688.

In order to decrypt the received fixed code trinary bit, following step 686, as shown in Fig. 8E, the last rolling code trinary bit received is subtracted from the current encrypted fixed code trinary bit in a step 687. The value is then corrected back to a positive base 3 value in a step 689. The resulting bit value is added to the encrypted fixed code trinary bit in a step 690 to yield a decrypted fixed code trinary bit.

Following step 688 the rolling code trinary bit value is added to the rolling code in a step 692. Following both of those steps a test is made in a step 694 to determine if the received bit number counter value is less than, greater than or equal to 21. If the received bit counter value is greater than 21 the radio code is rejected in a step 696 for having too many bits, indicating in reception, and the routine is exited. If the bit counter value is less than 21 return from interrupt is made and the next pulse edge in the radio signal is waited for in a step 698. In the event the bit counter value is equal to 21 a test is made in a step 700 for the presence of a first or second frame. If the FRAME 1 is being processed control is transferred to a step 702 causing the bit counter to be cleared and setting up for the second frame following which the interrupt is returned from. If the FRAME 2 is being received control is transferred to a step 704 combining the rolling code registers from the two frames into a single binary value by concatenation. In a step 706 the combined binary value is then mirrored, in other words, the least significant bit becomes the most significant bit. The most significant bit becomes the least significant bit, and so on.

A test is made to determine whether program mode has been set in a step 708, as shown in Fig. 8F. If program mode was not set a test is made in a step 710 to determine whether the received fixed code matches a fixed code stored in nonvolatile memory. If there is no match the routine is returned from and the new radio code is waited for in a step 712.

If there is a match control is transferred to a step 714, shown in Fig. 8G, where a test is made to determine whether the received counter value is within the forward rolling code window, 17,000 greater than the stored counter value, representative of 1,000 transmitter actuations. If it is control is transferred to a step 716 setting the flag for a command to operate the garage door. Control is then transferred to a step 718 causing the receiver rolling code to be resynchronized by updating the rolling code counter in nonvolatile memory to match the received value of the counter and the interrupt is returned from in a step 720.

In the event the received counter value is outside the 17,000 bit forward rolling code window or limit of step 714 a test is made in a step 722 to determine whether the fixed code that was received matches the previous fixed code received, as a backup identifier of the particular transmitter. If it does a test is made in a step 724 to determine if the received rolling counter value is behind the backward rolling code window because it is less by 5100 than the rolling counter value in nonvolatile memory. If it is not control is transferred to a step 726 which tests whether the received rolling code is within the resynchronization rolling code window, 18 bits greater than the previous received rolling code which is outside the forward rolling code window. The system, having detected a rolling code outside the forward window, thus tests for two receipts of the fixed code consecutively and resynchronizes the receiver by resynchronizing the stored rolling code within the receiver. Thus a synchronization window exists when either the received rolling code is within the forward rolling code or it is within the twice consecutive window tested for in step 726. The door operator flag signal is set in step 716 and the door is moved in response thereto by the motor. In step 718 the rolling code in the receiver is resynchronized. If the received rolling code as tested for in step 726 is not within 18 of the previously received rolling code step 728 is executed awaiting a new radio code.

Referring back to Fig. 8F, if the program mode has been set as tested for in step 708 a test is made in a step 736 to determine whether the code matches the last code received. If it does control is transferred to a step 738 testing whether the fixed portion of the code matches the fixed code already in nonvolatile memory. If it does the rolling code is replaced in the nonvolatile memory with the received rolling code in the step 740. If it does not the fixed and rolling portions of the code are stored in a new memory location in a step 742 following which in a step 744 the program indicator is switched off, the program mode is exited and the interrupt is returned from. In the event that the test in step 736 indicates that the code does not match the last code received the code is stored in a step 746 for comparison with the next received code.

## Claims

1. A transmitter for sending an encrypted signal to control an actuator, comprising:
means for generating a radio frequency oscillatory signal;
means for generating a sequence of variable binary codes each representing a rolling code;
means for generating three-valued or trinary codes responsive to the binary variable codes, the trinary code representing trinary values of the binary codes; and
means for pulse width modulating the radio frequency oscillatory signal with the trinary code to produce a pulse width modulated trinary coded variable radio frequency signal to transmit trinary values of the rolling code for operation or control of a secure actuator.

2. A transmitter for sending an encrypted signal to control an actuator according to claim 1, further comprising means for receiving said binary code and producing a mirrored binary signal, said mirrored binary signal being supplied to said means for generating the trinary signal code.

3. A transmitter for sending an encrypted signal to control an actuator according to claim 1, further comprising means for producing a fixed code signal and means for combining said fixed code signal with said rolling code.

4. A transmitter for sending an encrypted signal to control an actuator according to claim 3, further comprising means for interleaving trinary bits representing said fixed code signal with trinary bits representing said rolling code to produce a trinary interleaved fixed and rolling code signal.

5. A transmitter for sending an encrypted signal to control an actuator according to claim 1, wherein said means for generating said variable code further comprises means for changing the value of said variable code with each transmitter actuation.

6. A transmitter for sending an encrypted signal to control an actuator according to claim 5, wherein said variable code is altered by addition of a fixed value with each transmitter actuation.

7. A transmitter for sending an encrypted signal to control an actuator according to claim 6, wherein said means for generating said variable code increments said variable code by a prime number value.

8. A transmitter for sending an encrypted signal to control an actuator according to claim 1, wherein said means for generating a variable code includes a non-volatile memory for storing a variable code.

9. A transmitter for sending an encrypted signal to control an actuator according to claim 1, wherein said means for generating said variable code includes storage means holding a previous cycle variable code signal from which the variable code is generated.

10. A transmitter for sending an encrypted signal to control an actuator according to claim 1, wherein said means for generating a variable code comprises a source of a sequence of binary codes, successive binary codes of the sequence being different from predetermined preceding binary codes in the sequence.

11. A transmitter for sending an encrypted signal to control an actuator according to claim 3, wherein each of a plurality of bits of the fixed code signal is modified by a corresponding rolling code bit.

12. A transmitter for sending an encrypted signal to control an actuator according to claim 11, wherein the bits of the fixed code signal are modified by adding a corresponding rolling code bit thereto.

## Patentansprüche

1. Ein Sender für das Senden eines verschlüsselten Signals um ein Stellglied zu steuern, umfassend:
Mittel für das Erzeugen eines oszillierenden Funkfrequenz-Signals;
Mittel für das Erzeugen einer Sequenz von Variablen-Binär-Codes, jeder einen rollierenden Code repräsentierend;
Mittel für das Erzeugen von Drei-Werte-Codes oder "Trinär"-Codes, welche ansprechen/reagieren auf die Variablen-Binär-Codes und wobei die Trinär-Codes Trinär-Werte der Binär-Codes repräsentieren; und
Mittel für Pulsbreiten-Modulation des oszillierenden Funkfrequenz-Signals zur Erzeugung eines Pulsbreitenmodulierten trinär codierten Variablen-Funkfrequenz-Signals um trinäre Werte des rollierenden Codes für den Betrieb oder die Steuerung eines sicheren Stellglieds zu senden.

2. Ein Sender für das Senden eines verschlüsselten Signals um ein Stellglied nach Anspruch 1 zu steuern, außerdem umfassend Mittel für das Empfangen des Binär-Codes und das Produzieren eines gespiegelten Binär-Signals, wobei das gespiegelte Binär-Signal an das Mittel für das Erzeugen des trinären Signal-Codes geliefert wird.

3. Ein Sender für das Senden eines verschlüsselten Signals um ein Stellglied nach Anspruch 1 zu steuern, außerdem umfassend Mittel für das Produzieren eines festgelegten Signal-Codes und Mittel für das Kombinieren des festgelegten Signal-Codes mit dem rollierenden Code.

4. Ein Sender für das Senden eines verschlüsselten Signals um ein Stellglied nach Anspruch 3 zu steuern, außerdem umfassend Mittel für das Verschränken von Trinär-Bits, repräsentierend den festgelegten Signal-Code, mit den Trinär-Bits, repräsentierend den rollierenden Code, um ein trinäres Signal aus verschränktem festgelegten und rollierenden Code zu produzieren.

5. Ein Sender für das Senden eines verschlüsselten Signals um ein Stellglied nach Anspruch 1 zu steuern, wobei das Mittel für das Erzeugen des Variablen-Codes außerdem Mittel umfasst für das Ändern des Werts des Variablen-Codes mit jeder Aktivierung des Senders.

6. Ein Sender für das Senden eines verschlüsselten Signals um ein Stellglied nach Anspruch 5 zu steuern, wobei der Variablen-Code durch Addition eines festen Werts bei jeder Aktivierung des Senders geändert wird.

7. Ein Sender für das Senden eines verschlüsselten Signals um ein Stellglied nach Anspruch 6 zu steuern, wobei das Mittel für das Erzeugen des Variablen-Codes den Variablen-Code durch einen Primzahl-Wert erhöht.

8. Ein Sender für das Senden eines verschlüsselten Signals um ein Stellglied nach Anspruch 1 zu steuern, wobei das Mittel für das Erzeugen eines Variablen-Codes einen nicht-volatilen Speicher für das Speichern eines Variablen-Codes einschließt.

9. Ein Sender für das Senden eines verschlüsselten Signals um ein Stellglied nach Anspruch 1 zu steuern, wobei das Mittel für das Erzeugen des Variablen-Codes SpeicherMittel einschließt, haltend/speichernd einen Variablen-Signal-Code eines vorhergehenden Zyklus, aus welchem der Variablen-Code erzeugt wird.

10. Ein Sender für das Senden eines verschlüsselten Signals um ein Stellglied nach Anspruch 1 zu steuern, wobei das Mittel für das Erzeugen eines Variablen-Codes eine Quelle einer Sequenz von Binär-Codes umfasst, bei welcher nachfolgende Binär-Codes der Sequenz verschieden sind von vorbestimmten vorhergehenden Binär-Codes in der Sequenz.

11. Ein Sender für das Senden eines verschlüsselten Signals um ein Stellglied nach Anspruch 3 zu steuern, wobei jedes aus einer Vielzahl von Bits des festgelegten Signal-Codes durch ein korrespondierendes Bit des rollierenden Codes modifiziert ist.

12. Ein Sender für das Senden eines verschlüsselten Signals um ein Stellglied nach Anspruch 11 zu steuern, wobei die Bits des festgelegten Signal-Codes modifiziert werden durch Hinzuaddieren eines korrespondierenden Bits des rollierenden Codes.

## Revendications

1. Emetteur pour envoyer un signal crypté afin de commander un actionneur, comprenant :
des moyens pour générer un signal radiofréquence oscillant ;
des moyens pour générer une séquence de codes binaires variables, représentant chacun un code de brassage ;
des moyens pour générer des codes à trois valeurs ou trinaires, en réponse aux codes binaires variables, le code trinaire représentant des valeurs trinaires des codes binaires ; et
des moyens pour moduler la largeur d'impulsion du signal radiofréquence oscillant, avec le code trinaire, pour produire un signal radiofréquence variable à codage trinaire à modulation de largeur d'impulsion, pour transmettre des valeurs trinaires du code de brassage pour faire fonctionner ou commander un actionneur de sécurité.

2. Emetteur pour envoyer un signal pour commander un actionneur selon la revendication 1, comprenant en outre des moyens pour recevoir ledit code binaire et pour produire un signal binaire miroir, ledit signal binaire miroir étant fourni auxdits moyens servant à générer le code trinaire de signal.

3. Emetteur pour envoyer un signal crypté afin de commander un actionneur selon la revendication 1, comprenant en outre des moyens pour produire un signal à code fixe et des moyens pour combiner ledit signal à code fixe avec ledit code de brassage.

4. Emetteur pour envoyer un signal afin de commander un actionneur selon la revendication 3, comprenant en outre des moyens pour entrelacer des bits trinaires, représentant ledit signal à code fixe, et des bits trinaires représentant ledit code de brassage, pour produire un signal trinaire à code fixe et à code de brassage entrelacés.

5. Emetteur pour envoyer un signal crypté pour commander un actionneur selon la revendication 1, dans lequel lesdits moyens pour générer ledit code variable comprennent en outre des moyens pour changer la valeur dudit code variable, à chaque mise en fonction de l'émetteur.

6. Emetteur pour envoyer un signal crypté pour commander un actionneur selon la revendication 5, dans lequel ledit code variable est changé par ajout d'une valeur fixe, lors de chaque mise en fonction de l'émetteur.

7. Emetteur pour envoyer un signal crypté pour commander un actionneur selon la revendication 6, dans lequel lesdits moyens pour générer ledit code variable incrémentent ledit code variable d'une valeur d'un nombre premier.

8. Emetteur pour envoyer un signal pour commander un actionneur selon la revendication 1, dans lequel lesdits moyens pour générer un code variable incluent une mémoire non volatile pour stocker un code variable.

9. Emetteur pour envoyer un signal crypté pour commander un actionneur selon la revendication 1, dans lequel lesdits moyens pour générer ledit code variable incluent des moyens de stockage conservant un signal à code variable de cycle précédent, à partir duquel le code variable est généré.

10. Emetteur pour envoyer un signal crypté pour commander un actionneur selon la revendication 1, dans lequel lesdits moyens pour générer un code variable comprennent une source d'une séquence de codes binaires, des codes binaires successifs de la séquence étant différents de codes binaires précédents prédéterminés dans la séquence.

11. Emetteur pour envoyer un signal pour commander un actionneur selon la revendication 3, dans lequel chacun d'une pluralité de bits du signal à code fixe est modifié par un bit correspondant à code de brassage.

12. Emetteur pour envoyer un signal crypté pour commander un actionneur selon la revendication 11, dans lequel les bits du signal à code fixe sont modifiés en y ajoutant un bit correspondant à code de brassage.
